# EUROPÄISCHE PATENTSCHRIFT

(11) **EP 0 199 671 B1**
(45) Veröffentlichungstag und Bekanntmachung des Hinweises auf die Patenterteilung: **13.10.1993**
(21) Anmeldenummer: 86810148.6
(22) Anmeldetag: 27.03.1986
(51) Int. Cl.: C08G 59/14, C08G 59/16, C08L 63/10, C09J 133/12, C09K 3/00

(54) **Haftmittel auf Acrylatharzbasis und deren Verwendung zu Verankerungen**
Acrylic resin-based anchoring agent, and its use in anchorings
Agents d'accrochage à base de résines d'acrylate et leur application dans l'ancrage

(30) Priorität: 18.04.1985 DE 3514031
(43) Veröffentlichungstag der Anmeldung: 29.10.1986
(73) Patentinhaber: HILTI Aktiengesellschaft, 9494 Schaan (LI)
(72) Erfinder: Gebauer, Ludwig, D-8037 Olching 2 (DE); Mauthe, Peter, D-8065 Kleinberghofen (DE); Lang, Gusztav, Dr., Ing., D-8000 München 60 (DE)
(74) Vertreter: Wildi, Roland

(56) Entgegenhaltungen:
- EP-A- 0 150 555
- GB-A- 2 028 451
- JP-A-58 135 772
- PATENT ABSTRACTS OF JAPAN, Band 9, Nr. 145 (C-287)[1868], 20. Juni 1985; & JP-A-60 28 478

## Beschreibung

Reaktivharzmassen als Klebe- und Haftmittel auf der Basis von ungesättigten Polyesterharzen oder von Polyurethanen bzw von deren Bildungspartnern sind seit langem bekannt. Regelmässig handelt es sich um Zweikomponentensysteme, wobei eine Komponente das Reaktivharz bzw den einen Reaktionspartner und die andere Komponente den Härter bzw. den anderen Reaktionspartner enthält. Andere, übliche Bestandteile, wie Füllmittel, Beschleuniger, Stabilisatoren, Lösungsmittel einschliesslich Reaktivlösungsmittel, Farbstoffe und dergleichen können in der einen und/oder anderen Komponente enthalten sein. Durch Vermischen der beiden Komponenten wird dann die Reaktion unter Bildung eines gehärteten Produktes in Gang gebracht. Zur Befestigung von Ankerstangen in Bohrlöchern werden im allgemeinen Patronen verwendet mit zwei Kammern zur Trennung der in der Patrone enthaltenen Komponenten. Die Patrone wird in das Bohrloch eingesetzt und durch drehendes Einbringen der Ankerstange in die Bohrlöcher wird die Patrone und die Kammern zerstört und dabei werden die beiden Komponenten vermischt. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker in der Vergangenheit bewährt.

Indessen weisen adhäsive, ungesättigte Polyesterharzsysteme zB auf Basis von o- und/oder Isophthalsäure, Malein- bzw Fumarsäure als Dicarbonsäure und Dialkoholen bei den gestiegenen Anforderungen an Haftfestigkeit bzw an die Befestigungen gewisse Schwächen auf. So sind diesen Systemen Grenzen in der Wärmeformbeständigkeit (WFB nach Martens 50 - 70°C) sowie in der Alterungsbeständigkeit, insbesondere bei Einfluss von Feuchtigkeit, Temperaturwechseln und Alkalität gesetzt.

Polyurethansysteme andererseits reagieren empfindlich mit Nebenreaktionen in Gegenwart von Feuchtigkeit. Neben der normal verlaufenden Reaktion zwischen Polyol und Isocyanat tritt eine Konkurrenzreaktion mit dem Wasser ein. Da die WasserIsocyanat-Reaktion mit höherer Geschwindigkeit abläuft, zudem ein Teil des Isocyanats unter CO₂-Bildung für die Polyurethanbildung in unkontrollierter Weise verlorengeht, sind Störungen im Gefüge die zwangsläufige Folge.

Aufgabe der vorliegenden Erfindung ist es danach, ein adhäsives Mittel zur Verfügung zu stellen, welches frei ist von den bekannten Nachteilen und darüber hinaus weitere Vorteile zugänglich macht, wie sie nachfolgend in beispielhafter Weise erörtert sind.

Erfindungsgemäss wird dies erreicht bei radikalisch härtbaren Klebe-, Haft- und Dichtmittel auf Acrylatbasis, die erfindungsgemäss als härtbares Acrylat durch Umsetzung von Acrylsäurederivaten mit Epoxigruppen aufweisenden Bisphenol -Verbindungen erhältliche Reaktionsprodukte enthalten.

Der Erfindung liegt die Erkenntnis zugrunde, dass die durch die vorgenannte Umsetzung erhältlichen reaktionsfähigen Verbindungen besondere Vorteile zugänglich machen.

Erfindungsgemäb verwendet werden hierbei Abkömmlinge von Bisphenol A. Als Acrylsäurederivate wird Methacrylsäure verwendet.

Im Besonderen werden Bispropoxi-Bisphenole eingesetzt, mit endständigen Epoxigruppen, wobei die Propoxigruppe jeweils mit dem Kern direkt über eine Aethersauerstoffbrücke verbunden ist.

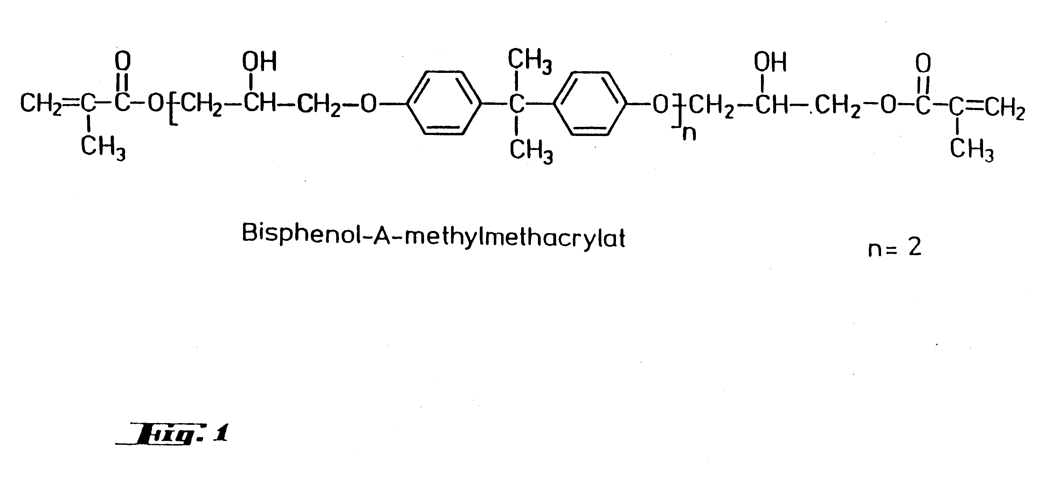

Die erfindungsgemässen Reaktivharze können durch die Abb. 1 erläutert werden.

Als Härter für die radikalisch härtbaren Reaktivharze können Initiatoren wie Diarylperoxide, zB Dibenzoylperoxid (BP) oder Bis(4-Chlorbenzoyl)peroxid (CLBP), Ketonperoxide, zB Methylethylketonperoxid (MEKP) oder Cyclohexanonperoxid (CHP), Alkylperester, zB t-Butyl-perbenzoat (TBPB) enthalten sein. Sie sind in üblichen Mengen, zB zwischen 0,5 bis 5 Gew.-%, bezogen auf die Gesamtmasse, enthalten.

Als Füllstoffe ist Quarz enthalten.

Die Bisphenol-A -methacrylate haben Molekulargewichte im Bereich von 800.

Als Reaktivverdünner werden Monostyrol oder Divinylbenzol verwendet.

Die Harzlösungen werden vorbeschleunigt mit Beschleunigern, wie sie für kalthärtende, ungesättigte Polyesterharze üblich sind. Als solche Beschleuniger können beispielsweise Dimethylanilin, Diäthylanilin, Dimethyl-p-toluidin, Cobaltoctoat, Cobaltnaphthenat sowie Cobalt/Amin-Beschleunigergemische eingesetzt werden.

Im Gegensatz zu kalthärtenden Epoxiden, deren Anwendungsgrenzen wegen ihrer Temperaturempfindlichkeit bei + 5°C liegen, lässt sich die Härtung der erfindungsgemässen radikalisch aushärtenden Reaktivharze mit Peroxiden wie bei den ungesättigten Polyestern durchführen. Selbst bei Temperaturen von beispielsweise - 10°C ist noch eine schnelle Aushärtung möglich.

Ein weiterer Vorteil liegt darin, dass im Hinblick auf eine gegenüber ungesättigten Polyesterharzen wesentlich geringere Volumenkonzentration an Estergruppen eine hohe Resistenz gegen alkalische Verseifung gegeben ist. Ein besonderer Vorteil liegt jedoch darin, dass die Doppelbindungen, insbesondere wenn sie endständig sind, da sterisch nicht gehindert, besonders reaktiv sind. Im Gegensatz zu den wegen ihrer üblichen Anordnung innerhalb der Polyesterkette sterisch gehinderten Doppelbindungen bei ungesättigten Polyesterharzen reagieren die erfindungsgemässen Reaktivharze sowohl schnell als auch praktisch quantitativ mit ihren Doppelbindungen.

Bei Verwendung der erfindungsgemässen Reactivharze erhält man aufgrund der Vernetzungsmöglichkeiten ein gehärtetes Produkt, welches gegenüber ausgehärteten, ungesättigten Polyesterharzen wesentlich zähelastischer ist und eine höhere Reissdehnung aufweist. Aufgrund der hohen Reissdehnung sind die Reaktivharze in der Lage, während des Härtungsverlaufs die auftretenden Volumenkontraktionen weitgehend spannungsfrei aufzunehmen.

Besonders bevorzugt haben sich Mischungen folgender Mischungsverhältnisse, bezogen auf die Gesamtmischung, aber ohne Härter, erwiesen:

| | |
|---|---|
| Reaktivharz | 9 - 28 Gew.-% |
| Reaktivverdünner | 4 - 16 Gew.-% |
| Füllstoffe | 56 - 82 Gew.-% |

Diese Mischungsgrenzen können beispielsweise bei 5 Gew.-% Härterkomponente angewendet werden. Zusammen mit dem Härter und als Härterbestandteil können Phlegmatisierungsmittel eingesetzt werden, sowohl organische Phlegmatisierungsmittel wie Phthalate, Chlorparaffin als auch anorganische Phlegmatisierungsmittel wie Gips, Kreide, Kieselsäure oder Wasser. Solche Phlegmatisierungsmittel sind in untergeordneten Mengen, beispielsweise im Bereich von 0,5 bis 3,5 Gew.-%, bezogen auf die Gesamtmischung, enthalten, ebenso wie Beschleuniger, die im Bereich von 0,005 bis 2,0 Gew.-%, bezogen auf die Gesamtmischung, vorliegen.

Reaktionsharz und Härter sind getrennt in einer Patrone bestehend aus zwei Kammern enthalten. Die Patronen oder derartige Einheiten bestehen aus Glas. Die Patrone wird dann nach Einbringen in das Bohrloch durch Einsetzen und Drehen des Dübels bzw der Ankerstange zerstört, wobei das Wandmaterial der Patrone als Füllstoff dienen kann, und dann den Füllstoffanteilen zuzurechnen ist. Es ist aber auch möglich, Systeme zu verwenden, in denen die eine Komponente, zB der Härter, mikroverkapselt ist. Beim Einsetzen der Ankerstange wird dann das Wandmaterial der Mikrokapseln zerstört.

Die hohe Reissdehnung des 2- Komponenten Systems gewährleistet eine weitgehend spannungsfreie Aufnahme der während der Härtung auftretenden Volumenkontraktion. Bei Belastung des Ankers tritt eine von der Bohrlochtiefe abhängige Dehnung der Ankerstange ein. Die erfindungsgemässen zähelastischen Mittel sichern eine gegenüber bisher bekannten Verbundankern auf Basis ungesättigter Polyester wesentlich günstigere Lastverteilung auf den gesamten Verbundbereich und insbesondere den Abbau der an der Oberfläche des Aufnahmewerkstoffs, zum Beispiel Beton, auftretenden Spannungsspitzen. Ganz allgemein führen die erfindungsgemässen Reaktivharze, welche Methacrylsäure modifizierte Bisphenolverbindungen enthalten, zu Produkten mit höherer Wärmeformbeständigkeit, was insbesondere bei der Verwendung im Verbundankerbereich, zur Befestigung von Dübeln und Ankerstangen in Bohrlöchern von Bedeutung ist. Dies ergibt sich aus dem aus der Molekülstruktur resultierenden höheren Vernetzungsgrad. Diese höhere Temperaturbeständigkeit ist gleichzeitig mit einer höheren Chemikalienbeständigkeit verknüpft. Ein weiterer Vorteil ist die hohe Witterungsbeständigkeit und die geringe Wasseraufnahme auch bei langfristiger Berührung mit Wasser.

Die Epoxid-Bisphenole können in üblicher Weise durch Reaktion des Bisphenols zB mit Epichlorhydrin hergestellt werden (vgl. zB H.G. Elias, Makromoleküle, Basel, Heidelberg 1972, S. 707 - 709).

In den nachfolgenden Ausführungsbeispielen ist die Erfindung näher erläutert.

### Beispiel 1 Dimension M 12

| a) Aussenpatrone | | |
|---|---|---|
| Glasgewicht | | 5,6 g |
| Glasaussendurchmesser | 10.75 mm | |
| Glaswandstärke | 0.55 mm | |
| Patronenlänge | 100 mm | |
| Bisphenol-A-methacrylat (65 %ig in Monostyrol, aminbeschleunigt) | | 4,3 g |
| Quarz (Korngrösse 1,5 - 2,0 mm) | | 6,6 g |

| b) Innenpatrone | | |
|---|---|---|
| Glasgewicht | | 1,2 g |
| Glasaussendurchmesser | 6,30 mm | |
| Glaswandstärke | 0.65 mm | |
| Patronenlänge | 80 mm | |
| Dibenzoylperoxid (20 % in Gips) | | 0,8 g |

### Beispiel 2

| a) Aussenpatrone | | |
|---|---|---|
| Glasgewicht | | 5,8 g |
| Glasaussendurchmesser | 10.75 mm | |
| Glaswandstärke | 0.45 mm | |
| Patronenlänge | 110 mm | |
| Bisphenol-A-methacrylat (80 %ig in Methacrylsäureester, vorbeschleunigt mit Amin) | | 4,2 g |

| b) Innenpatrone | | |
|---|---|---|
| Glasgewicht | | 2,2 g |
| Glasaussendurchmesser | 9.20 mm | |
| Glaswandstärke | 0.45 mm | |
| Patronenlänge | 90 mm | |
| Quarz (0,04 - 0,15 mm) | | 0,4 g |
| Quarz (1,2 - 1,8 mm) | | 5,0 g |
| Dibenzoylperoxid (50 %ig in Kreide) | | 0,5 g |

In der Abbildung 1 ist das in den erfindungsgemässen Reaktivharzen enthaltene Reaktionproduckt in beispielhafter Form erläutert.

## Patentansprüche

1. Patrone zur Befestigung von Ankerstangen in Bohrlöchern, enthaltend ein 2-Komponentensystem auf Acrylatharzbasis aus,
a) einem Reaktivharz in einer Menge von 9-28 Gew.%, das besteht aus,
einem oligomeren Umsetzungsprodukt von Bisphenol-A-Epoxiden, und Methacrylsäure der allgemeinen Formel 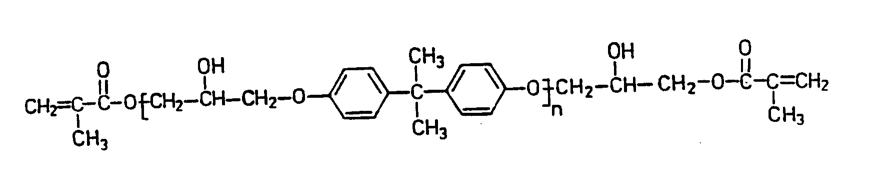 worin n einen durchschnittlichen Wert von ungefähr 2 hat.
b) einem Härter bestehend aus 0,5-5 Gew.% Diarylperoxiden, Ketonperoxiden oder Alkylperestern
c) 4-16 Gew.% Styrol oder Divinylbenzol als Reaktivverdünner
d) 56-82 Gew.% Quarz einer Teilchengröße von 0,1-2mm als Füllmittel im Reaktivharz und/oder Härter und
e) 0,005-2 Gew.% Beschleuniger,
wobei die Gewichtsprozente sich jeweils auf das Gesamtgewicht aus Harz, Reaktivverdünner und Füllstoff beziehen, und
wobei die Patrone zwei Kammern aufweist und aus Glas gebildet ist und
in welchen getrennt voneinander das Reaktivharz und der Härter enthalten sind.

## Claims

1. Cartridge for the attachment of armature bars in bore holes, comprising an acrylate-resin based 2-component system of
a) a reactive resin at a quantity of 9 - 28 % by weight, composed of
an oligomeric conversion product of bisphenol-A-epoxides and methacrylic acid of the general formula 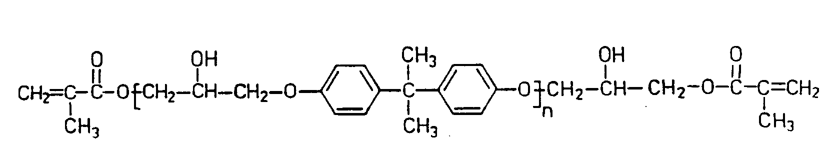 wherein n has an average value of approximately 2;
b) a hardening constituent consisting of 0̸.5 - 5 % by weight diaryl peroxides, ketone peroxides or alkyl peresters;
c) 4 - 16 % by weight styrene or divinyl benzene as reactive thinner;
d) 56 - 82 % by weight quartz or a particle size of 0̸.1 - 2 mm as filler in the reactive resin and/or hardener; and
e) 0̸.0̸0̸5 - 2 % by weight catalyst,
wherein the weight percents relate to the respective total weight of resin, reactive thinner and filler, and
wherein the cartridge comprises two chambers and is formed of glass, and
wherein the reactive resin and the hardener are held separate from each other.

## Revendications

1. Cartouche pour la fixation de boulons d'ancrage dans des trous de perçage, contenant un système à deux composants à base de résine acrylate, formé de :
a) une résine réactive en une proportion de 9-28 % en poids, qui est constituée :
d'un produit de réaction oligomère d'époxydes de bisphénol A et d'acide méthacrylique, de formule générale : 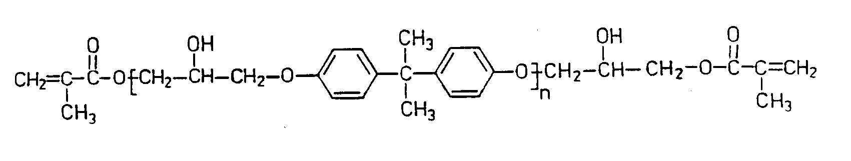 dans laquelle n présente une valeur moyenne d'environ 2,
b) un durcisseur constitué de 0,5-5 % en poids de peroxydes de diaryle, de peroxydes de cétone ou de peresters d'alkyle,
c) 4-16 % en poids de styrène ou de divinylbenzène, comme diluant réactif,
d) 56-82 % en poids de quartz, ayant une taille de particules de 0,1-2 mm, comme charge dans la résine réactive et/ou le durcisseur, et
e) 0,005-2% en poids d'accélérateur,
les % en poids étant calculés dans chaque cas par rapport au poids total de la résine, du diluant réactif et de la charge, et
la cartouche comprenant deux compartiments et étant constituée de verre, et
la cartouche contenant la résine réactive et le durcisseur séparément l'un de l'autre.
